Europäisches Patentamt

European Patent Office

Office européen des brevets

(19)

(11) Numéro de publication: **0 261 997**
**A1**

(12) # DEMANDE DE BREVET EUROPEEN

(21) Numéro de dépôt: **87400911.1**

(22) Date de dépôt: **17.04.87**

(51) Int. Cl.³: **G 06 K 9/68**

(30) Priorité: **11.09.86 FR 8612692**

(43) Date de publication de la demande:
**30.03.88 Bulletin 88/13**

(84) Etats contractants désignés:
**AT BE CH DE ES FR GB GR IT LI LU NL SE**

(71) Demandeur: **ANATEX**
**18 rue Troyon**
**F-75017 Paris(FR)**

(72) Inventeur: **Maury, Xavier**
**10, rue de Sfax**
**F-75116 Paris(FR)**

(74) Mandataire: **Beauchamps, Georges et al,**
**Cabinet Z. Weinstein 20, avenue de Friedland**
**F-75008 Paris(FR)**

(54) Procédé de reconnaissance d'écriture manuscrite.

(57) L'invention concerne un procédé de reconnaissance d'écriture manuscrite.

Le procédé comprend l'application de critères prédéterminés, à un tracé d'écriture manuscrite ou à des éléments de ce tracé, afin que plusieurs caractéristiques de ce tracé ou de ces éléments soient déterminées, la comparaison des caractéristiques ainsi déterminées aux caractéristiques représentatives d'éléments connus d'écriture, et l'identification d'un élément du tracé à un élément connu d'écriture lorsque la comparaison de leurs caractéristiques donne un résultat prédéterminé.

Le procédé est caractérisé en ce qu'il comprend l'établisement d'une séquence d'opérations prédéterminées en fonction des caractéristiques déterminées par application des critères aux éléments de tracé.

L'invention est utilisable pour la dactylographie directe du texte manuscrit.

EP 0 261 997 A1

1

## Procédé de reconnaissance d'écriture manuscrite

La présente invention concerne un procédé de reconnaissance d'écriture manuscrite.

Les études réalisées depuis de nombreuses années sur la reconnaissance de l'écriture manuscrite par la machine ont montré que de nombreux problèmes se posaient. Les paragraphes qui suivent indiquent rapidement quels sont ces problèmes et comment ils peuvent être résolus.

Les éléments fondamentaux de l'écriture sont les lettres et les chiffres (sans compter des signes spécialisés) et on les appelle "éléments d'écriture" dans la suite. Ces éléments sont regroupés en mots, mais leur reconnaissance doit commencer par leur individualisation. Dans l'écriture imprimée, les lettres et autres signes sont séparés (caractères) et leur délimitation ne pose donc pas de problème. Par contre, dans l'écriture manuscrite liée, les éléments du tracé qui sont représentatifs d'éléments d'écriture ne sont pas individualisés (cas des lettres en général car les chiffres sont habituellement séparés les uns des autres) et leur reconnaissance impose donc leur délimitation ou découpage préalable.

Une fois le tracé découpé en éléments, il convient d'identifier chacun de ces éléments par détermination de l'élément d'écriture auquel il correspond. Cette identification repose sur l'utilisation de critères très divers tels que tailles, courbures, inclinaisons, sens, etc.

Une première approche a été la recherche des critères permettant l'identification "absolue" des éléments d'écriture, c'est-à-dire valables pour toutes les écritures manuscrites. Cette approche n'a de succès que lorsque la personne qui écrit accepte de respecter une présentation très rigide, avec des lettres bien formées, de taille régulière et d'orientation constante.

On a donc essayé de se soustraire à ces contraintes par utilisation d'une phase d'apprentissage. Dans ce cas, dans une phase préalable à la reconnaissance, la personne qui écrit trace un texte connu et les caractéristiques de chaque lettre (obtenues par application successive des divers critères) sont conservées et utilisées ultérieurement pour la comparaison à d'autres caractéristiques. Ce procédé permet effectivement la reconnaissance de l'écriture manuscrite. Cependant, il nécessite un grand nombre d'opérations élémentaires pour sa mise en oeuvre, étant donné que tous les critères sont appliqués à chaque élément de tracé et donnent lieu à une comparaison.

Les procédés actuels ne permettent donc pas la reconnaissans en temps réel d'écritures manuscrites pratiquement quelconques, par mise en oeuvre d'appareils de puissance raisonnable, par exemple de micro-ordinateurs.

L'invention concerne un procédé de reconnaissance d'écriture manuscrite qui fonctionne en temps réel par mise en oeuvre d'un appareillage réduit, ne dépassant pas la puissance d'un micro-ordinateur.

Elle concerne un tel procédé qui permet la reconnaissance de toutes les écritures manuscrites, quels que soient leurs tailles et leurs styles (alphabets non européens, idéogrammes, symboles scientifiques, etc).

Plus précisément, elle concerne un procédé de reconnaissance utilisant les résultats soit d'une phase préalable d'apprentissage, soit de la reconnaissance progressive de l'écriture , soit à la fois de cette·phase préalable et de la reconnaissance progressive non seulement pour la sélection des critères les plus efficaces dans le cas particulier d'écriture manuscrite considéré, mais aussi pour l'établissement de la séquence d'opérations (arbre de décision) la mieux adaptée au traitement de cette écriture.

Le procédé de reconnaissance d'écriture manuscrite selon l'invention est du type qui comprend
-l'application de critères prédéterminés, suivant une séquence prédéterminée d'opérations, à un tracé d'écriture manuscrite ou à des éléments de ce tracé, afin que plusieurs caractéristiques de ce tracé ou de ces éléments soient déterminées,
- la comparaison des caractéristiques ainsi déterminées à des caractéristiques représentatives d'éléments connus d'écriture, et
- l'identification d'un élément du tracé à un élément connu d'écriture lorsque la comparaison de leurs caractéristiques donne un résultat prédéterminé.

Le procédé se caractérise en ce qu'il comprend l'établissement de la séquence d'opérations prédéterminées en fonction des caractéristiques déterminées par application des critères aux éléments du tracé.

Il est avantageux que la phase d'établissement de la séquence d'opérations comprenne une détermination de l'ordre dans lequel les critères doivent être appliqués

0261997

4

au tracé ou à des éléments de ce tracé. Il est aussi avantageux que la phase d'établissement comprenne aussi la sélection de certains critères seulement, parmi un grand nombre de critères qui peuvent être utilisés.

Les caractéristiques représentatives d'éléments connus d'écriture, l'ordre de la séquence d'opérations et/ou la sélection des critères sont avantageusement remis à jour progressivement pendant les opérations ultérieures de reconnaissance d'écriture manuscrite.

Le procédé comporte avantageusement une phase préalable d'apprentissage dans laquelle des éléments de tracé correspondant à des éléments connus d'écriture manuscrite, tels que des lettres et des chiffres, sont soumis à l'application de plusieurs critères prédéterminés, afin que des caractéristiques représentatives de ces éléments connus d'écriture soient déterminées et conservées, cette phase préalable d'apprentissage comprenant l'établissement de la séquence d'opérations utilisée pour la reconnaissance.

De préférence, le procédé comprend, avant l'application des critères prédéterminés, le codage de points remarquables du tracé et des éléments de tracé. Il est aussi avantageux qu'il comprenne aussi l'élimination de certains points remarquables en fonction de critères de proximité.

Dans ce mode de réalisation avantageux, le procédé comporte aussi le découpage du tracé en éléments de tracé. Ce découpage du tracé comprend avantageusement la détermination de points particuliers de coupure possible et l'évaluation, pour chaque point particulier, de la probabilité que ce point constitue effectivement une coupure entre deux éléments d'écriture. En outre, il est avantageux que la séquence d'opérations utilisée pour la détermination de la probabilité qu'un point constitue une coupure entre deux éléments d'écriture soit établie en fonction des caractéristiques déterminées pendant la phase d'apprentissage.

De préférence, le procédé comporte en outre la comparaison de groupes d'éléments d'écriture provisoirement identifiés à un dictionnaire contenant de tels groupes.

D'autres caractéristiques et avantages de l'invention ressortiront mieux de la description qui suit, faite en référence aux dessins annexés sur lesquels :

La figure 1 représente quelques lettres et indique comment est réalisé leur codage selon l'invention.

La figure 2 représente un mot et indique comment est envisagée son découpage en lettres.

La figure 3 représente quelques lettres et indique comment est interprété leur codage;

La figure 4 représente un mot manuscrit utilisé pour la description d'opérations exécutées pendant la reconnaissance ;

La figure 5 est un tableau indiquant le résultat de l'analyse d'un texte d'écriture manuscrite selon la présente invention ;

La figure 6 montre l'arbre de décision établi à partir du tableau de la figure 5 ;

Les figures 7 à 10 illustrent des opérations de l'établissement d'un arbre de décision selon la présente invention;

La figure 11 montre l'organigramme d'établissement d'un arbre de décision selon l'invention ;

La figure 12 montre l'organigramme du processus de reconnaissance d'une lettre selon l'invention;

La figure 13 illustre le principe d'un treillis de distribution selon l'invention, et

La figure 14 montre l'organisation d'un dictionnaire hiérarchisé selon la présente invention.

La description qui suit concerne essentiellement un mode de réalisation dans lequel la reconnaissance d'une écriture manuscrite comporte une première étape d'apprentissage nécessitant la copie à la main d'un texte connu de la machine, puis une reconnaissance dans laquelle les résultats de la phase d'apprentissage sont utilisés. La reconnaissance est en outre utilisée pour la remise à jour des résultats donnés par la phase de reconnaissance. Cependant, cette remise à jour n'est pas indispensable, lorsque l'écriture de l'opérateur varie peu à long terme. En outre, l'apprentissage préalable peut être aussi omis, la reconnaissance étant alors peu efficace au début, c'est-à-dire que la machine utilisée doit demander beaucoup d'aide à l'opérateur (place des coupures de lettres, nature d'une lettre, etc). Cette interactivité est très avantageuse dans le cadre de l'invention, aussi bien en phase d'apprentissage qu'en phase de reconnaissance proprement dite.

Dans le mode de réalisation considéré, le procédé de reconnaissance selon l'invention comprend deux phases séparées, l'apprentissage d'après un tracé connu, puis la reconnaissance de tracés inconnus, avec de préférence remise à jour des résultats de l'apprentissage au cours d'une sorte d'"apprentissage continu". Il convient d'envisager d'abord la phase de reconnaissance afin de
comprendre les processus et critères mis en jeu et les
caractéristiques qui doivent être connues, puis l'apprentissage afin de comprendre comment des caractéristiques initiales sont obtenues.

La description qui suit concerne un cas particulier
d'ensemble de critères. Cependant, d'autres ensembles
de critères peuvent être utilisés. Cette description est
donc un simple exemple qui ne limite aucunement la
portée de l'invention.

La reconnaissance commence par l'application de critères
prédéterminés. Cependant, il faut que le tracé à reconnaître subisse la délimitation en éléments séparés
de tracé. Cette délimitation est réalisée à l'aide d'un
codage initial du tracé en points remarquables, par
application d'un premier critère. Ce critère est avantageusement la détermination des extrema du tracé, c'est-
à-dire des points hauts, des points bas, des extrémités
droite et gauche et des levers de l'instrument d'écriture (ce dernier point concernant le cas de la saisie
dynamique de l'écriture).

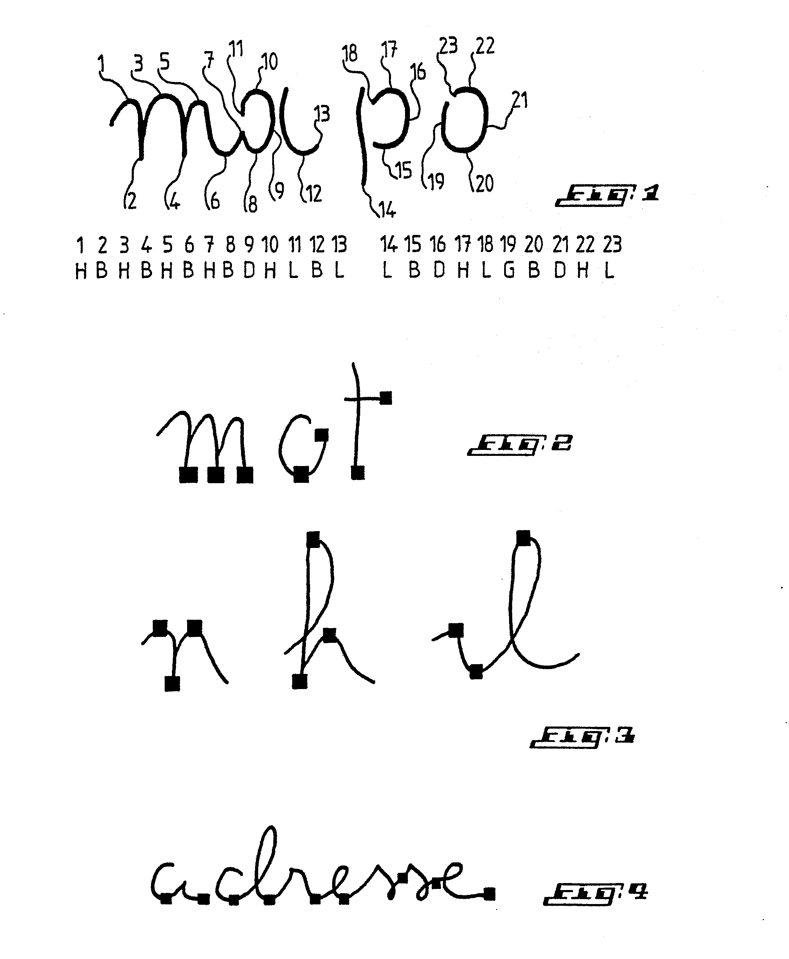

La figure 1 représente, sous forme très agrandie, une
partie d'un tracé d'écriture comprenant quatre lettres
appartenant à deux mots, deux des lettres étant liées
et les deux autres ne l'étant pas. La figure indique,
sur les deux lignes du bas, comment sont interprétés
les points remarquables du tracé. Ces points comportent
des points hauts (H), des points bas (B), des parties
gauches (G) et des parties droites (D) ainsi que des
levers de l'instrument d'écriture (L). Dans un premier
temps, ce tracé est donc codé sous la forme
HBHBHBHBDHL-BL-L-BDHL-GBDHL. Ce code subit d'abord un
filtrage destiné à supprimer les points trop rapprochés,
par application d'une valeur de seuil, dans les deux directions principales de préférence (X et Y). Dans le cas particulier de la figure 1, les points éliminés sont le point 12 (très proche du point 13), les points 15 et 19 (trop proches de l'emplacement de pose de l'instrument d'écriture) et le point 22 (trop proche du lever 23). On peut noter que le point 7, bien que proche des points 6 et 8, est conservé. En effet, le point 7 correspond à une caractéristique très importante, un point de rebroussement, et doit donc être conservé. Le nouveau code est donc  HBHBHBHBDHL-L-L-DHL-BDL.

Il faut noter que le processus qu'on vient de décrire ne nécessite qu'un très faible temps de calcul, contrairement à d'autres critères tels que la détermination d'une courbure, et il est donc souhaitable qu'il soit adopté presque systématiquement, d'autant plus qu'il est très discriminateur, dans tous les types d'écritures manuscrites.

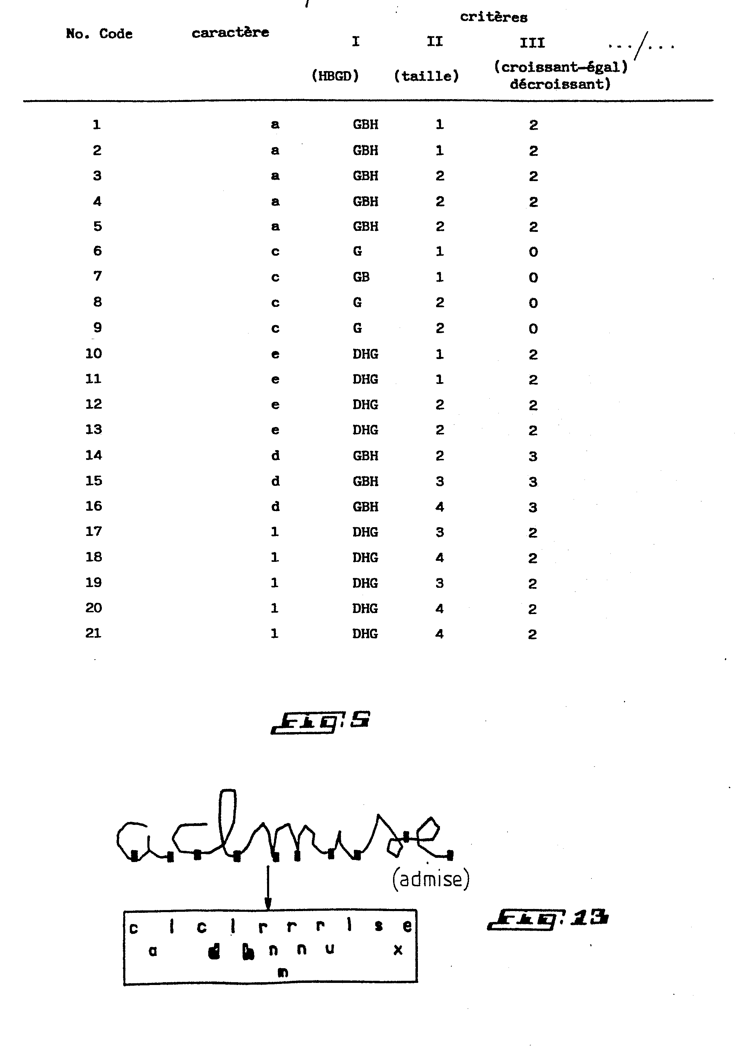

Comme noté précédemment, la reconnaissance doit être précédée d'un découpage, c'est-à-dire de la coupure du tracé en éléments d'écriture séparés (correspondant chacun à une lettre). Ce découpage comprend avantageusement deux étapes : d'abord la détermination de tous les points de coupure possibles, puis l'évaluation de la probabilité, pour chaque point de coupure, que celui-ci constitue effectivement un tel point de coupure. La figure 2 représente un mot sur lequel ont été indiqués tous les points de coupure possibles (sous forme de petits carrés noirs). Ces points délimitent entre eux des "segments". L'évaluation de la probabilité précitée comprend le calcul de la distance comprise entre le segment considéré et le segment précédent, puis, en fonction de cette distance, le calcul de la position relative (y a-t-il retour en arrière?). Ces calculs permettent de déterminer, dans 95% des cas, s'il s'agit d'une coupure de lettre, une coupure de mot, un accent ou un retour à la ligne. Les autres cas (5% restants) sont traités par extension de là notion de lettre à une séquence de lettres, lors de l'apprentissage. Bien entendu, d'autres critères peuvent être utilisés pour la détermination de ces coupures.

Les critères utilisés pour la reconnaissance des lettres ainsi délimités peuvent être très divers, et on en passe un certain nombre en revue.

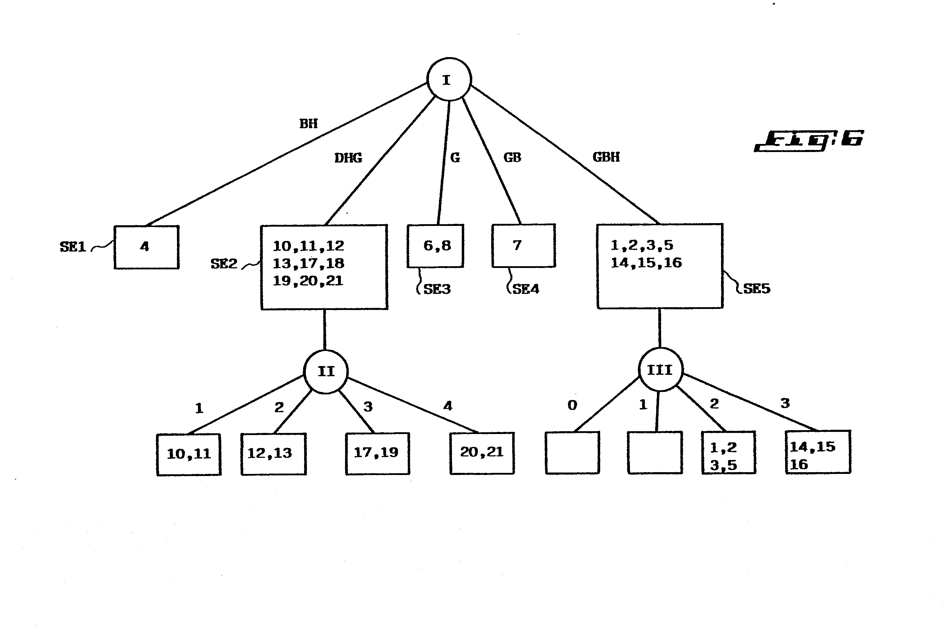

Une première famille de critères concerne la taille des éléments délimités. La figure 3 illustre certains de ces critères. Sur celle-ci, le "n" est du type HBH de hauteur égale (on note qu'on a supprimé les points remarquables représentant effectivement un point de coupure), le "h" est du type HBH décroissant et le groupe "il" est du type HBH croissant. Les boucles peuvent être très ouvertes, ouvertes ou fermées. Les boucles peuvent être ouvertes à droite ou à gauche, ou fermées à droite ou à gauche.

Une seconde famille de critères concerne les dimensions. L'élément de tracé peut être très grand (f manuscrit), grand (l) , petit (a) ou très petit (,). Ces critères peuvent s'appliquer à tout l'élément ou à un segment seulement de celui-ci (entre deux points remarquables). De même, l'élément peut être très large, large, étroit ou très étroit.

Une troisième famille est celle des courbures. Elle comprend les courbures dans le sens des aiguilles d'une montre et dans le sens inverse ainqi que les points de rebroussement. Elle comprend aussi l'absence de courbure (segment de droite) et la présence d'une coupure.

Une quatrième famille est celle des rectangles. Le rectangle peut être haut (lettre "l"), bas (lettre "m")

ou carré (lettre "a"). Ce critère du rectangle peut être appliqué à la totalité de l'élément du tracé ou à une partie seulement.

Une cinquième famille est celle des positions relatives des points remarquables. Elle permet de déterminer des caractéristiques telles que : recule, stationne, avance, avance très vite, décroissant, égal, croissant, proche, lointain, etc.

Une sixième famille concerne les orientations. Elle donne les caractéristiques suivantes : haut, haut-droite, droite, bas-droite, bas, bas-gauche, gauche et haut-gauche. Elle indique aussi l'orientation générale entre deux posers, entre deux levers, entre un poser et un lever et entre un lever et un poser. L'orientation peut aussi être déterminée pour un segment, ou pour tout le trait initial ou final.

Une septième famille est celle des positionnements. Elle concerne la détermination de la position d'un tracé par rapport à des lignes remarquables (ligne de base, interligne). Ces critères permettent la détermination de zones médiane, d'accent et de virgule, et la présence de hampes et de jambages.

Une huitième famille, éventuellement utilisée, comporte le traitement des points qui ont été éliminés lors du filtrage initial du code.

Une neuvième famille est celle des codes extrêmes. Elle indique comment sont délimitées les deux extrémités des éléments du tracé (poser, lever ou coupure).

Bien entendu, d'autres critères et familles de critères peuvent être utilisés du moment qu'ils possèdent un caractère discriminateur.

Après détermination des caractéristiques des éléments de tracé, ces caractéristiques sont comparées à celles des éléments d'écriture qui ont été déterminées pendant l'apprentissage.

Cependant, tous ces critères sont bien trop nombreux pour pouvoir être utilisés en temps réel dans une reconnaissance. C'est la raison pour laquelle on a déjà tenté d'ordonner ces critères, en les organisant suivant un arbre de décision dont les premiers niveaux comprennent les critères les plus discriminateurs. Néanmoins, comme cette organisation devait pouvoir convenir à toutes les écritures à reconnaître, l'arbre devait conserver tous les critères et posséder un très grand nombre de niveaux. On n'a pas pu obtenir une reconnaissance en temps réel de cette manière sans appareillage extrêmement puissant.

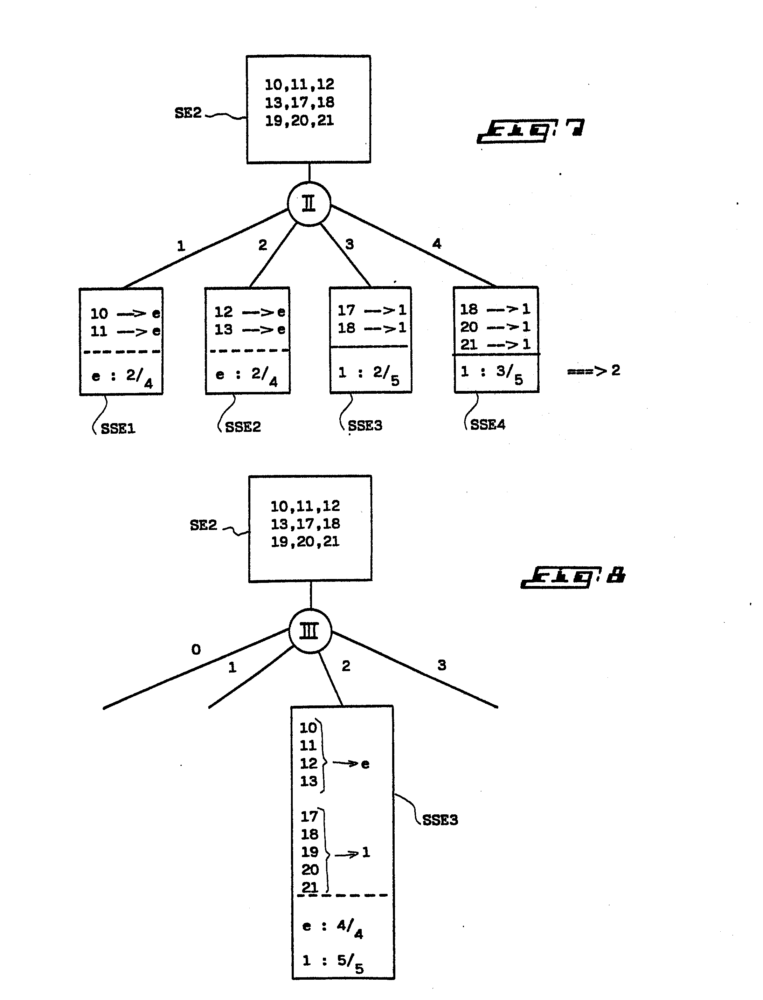

Pourtant, un petit nombre seulement de critères suffit en général pour la reconnaissance. On va considérer à cet effet l'exemple du mot "adresse" indiqué sur la figure 4.

Sur la figure 4, les carrés noirs représentent des points possibles de coupure. Un "segment" est un élément de tracé compris entre deux points consécutifs de tracé ou entre un début de tracé et le premier point possible de coupure. La première opération est cette détermination de ces points remarquables, suivant un processus purement automatique.

Ensuite, les opérations de reconnaissance partielle, de découpage en lettres (c'est-à-dire de regroupement éventuel de plusieurs segments en une seule lettre) en fonction de cette reconnaissance partielle et de reconnaissance finale en fonction de ce découpage en lettres complètes sont exécutées, parfois même avec appel à des règles lexicographiques ou même à un véritable
dictionnaire.

Ainsi, dans le cas particulier du mot adresse représenté
sur la figure 4, le premier critère utilisé est le
critère "HGBDL", déjà décrit pour le codage en référence à la figure 1. Le premier segment, de code HGB,
peut être soit un C, soit une partie de lettre D, A ou Q.
Le second segment a un code BHB et peut représenter un I,
un L ou une partie de lettre H ou F. La combinaison des
deux premiers segments ne peut pas être un Q et, si
combinaison il y a, il ne peut s'agir que d'un D ou
d'un A. Le troisième segment a un code HGB comme le
premier et peut donc être un C ou une partie de lettre D,
A ou Q. Le quatrième segment a un code BDBGB et peut
représenter un L seul ou une partie de lettre D ou A
(en combinaison avec le segment précédent) ou une
partie de H (en combinaison avec le segment suivant).
Le segment suivant a un code BHB qui peut représenter,
seul ou avec un segment suivant, diverses lettres, mais
qui peut, en combinaison avec le segment précédent,
former un H. Des remarques analogues s'appliquent aux
segments suivants.

On note donc que l'application d'un seul critère ne
laisse disponible que les combinaisons suivantes (pour
le début du mot seulement) : CICL, CICH, CID, CIA, ACL,
ACH, AD, AA, DCL, DCH, DD et DA.

On utilise ensuite le critère "croissant-égal-décroissant"
(première famille de critères indiquée précédemment).
Ce critère, appliqué au groupe des deux premiers segments, donne le résultat "égal ou décroissant", et,
appliqué au groupe du troisième et du quatrième segment,
donne le résultat "croissant". En conséquence, les
quatrième et huitième à douzième solutions possibles
données par le premier critère se trouvent éliminées.

13

Il ne reste plus que six combinaisons possibles.

Un autre critère permet alors une réduction supplémentaire, et la comparaison à un dictionnaire peut lever les dernières ambiguïtés

On note ainsi qu'un tout petit nombre de critères seulement donne une sélectivité très grande. En outre, ces critères peuvent être obtenus très simplement et ne nécessitent pas de long temps de traitement ou de calcul par la machine. C'est la sélection de ces critères et leur petit nombre, permis par la construction de la séquence d'opérations de reconnaissance spécifique de l'écriture considérée, qui permettent la reconnaissance en temps réel de l'écriture.

La détermination des critères à utiliser, la construction de la séquence d'opérations et la détermination des caractéristiques des éléments de l'écriture manuscrite considérée sont assurées par un apprentissage. Ainsi, la phase d'apprentissage est utilisée selon l'invention pour la sélection des critères les plus discriminateurs dans le cas particulier de l'écriture traitée et pour la construction de l'arbre de décision (séquence d'opérations élémentaires) qui donne la reconnaissance la plus rapide et la plus efficace pour ce cas particulier.

On considère donc maintenant la phase d'apprentissage. Cette phase a pour but la sélection et l'organisation des critères. Elle doit donc mettre en oeuvre un grand nombre de critères, de péréfrence le plus grand nombre possible. Ensuite, elle doit déterminer l'efficacité de chacun des critères et faire un choix parmi les critères. Elle doit aussi éviter les critères donnant des résultats insuffisamment stables.

L'apprentissage comprend la saisie d'un texte connu, le découpage de ce texte en lettres, puis la détermination des caractéristiques par application des critères (mesure), le traitement des valeurs des caractéristiques, le calcul des probabilités de reconnaissance, et enfin la construction de la séquence d'opérations constituant l'arbre de décision.

La première étape, la saisie, comprend la recopie par l'utilisateur d'un texte fractionné, par exemple à l'aide d'une tablette graphique reliée à un micro-ordinateur. le texte contient de préférence tous les signes de l'ensemble de signes utilisé, par exemple les lettres, les chiffres et les signes de ponctuation d'un alphabet, ainsi que des symboles pour la correction. Bien entendu, plus les échantillons de texte sont représentatifs de la reconnaissance ultérieure à effectuer et plus l'apprentissage est efficace.

L'étape suivante est le découpage. Le découpage en segments est entièrement réalisé par la machine qui n'a besoin d'aucune aide d'un opérateur dans la mesure où elle connaît le texte. Cependant, la sélection des points de coupure (délimitation des lettres) engage la responsabilité de l'opérateur sur les résultats qui peuvent être obtenus puisque c'est l'opérateur qui décide en dernier ressort de l'identification de son tracé à une ou plusieurs lettres. A la suite du découpage, un élément de tracé est associé à un signe (lettre, chiffre, etc). L'apprentissage est accéléré lorsque l'appareil utilisé pour la saisie (micro-ordinateur relié à une tablette graphique) indique lui-même où il compte effectuer la coupure. L'opérateur n'a qu'à valider la coupure entre les lettres ou au contraire à indiquer où elle doit s'effectuer.

L'étape suivante est le mesure des caractéristiques par application des critères énoncés précédemment. La mesure consiste, dans son principe à faire l'analyse complète d'un tracé à l'aide de tous les critères. Chaque lettre qui après découpage était associée à un tracé est associée maintenant à une liste de valeurs, celles des critères. On appelle cette liste de valeurs un élément de mesure qui constitue donc un ensemble de caractéristiques.

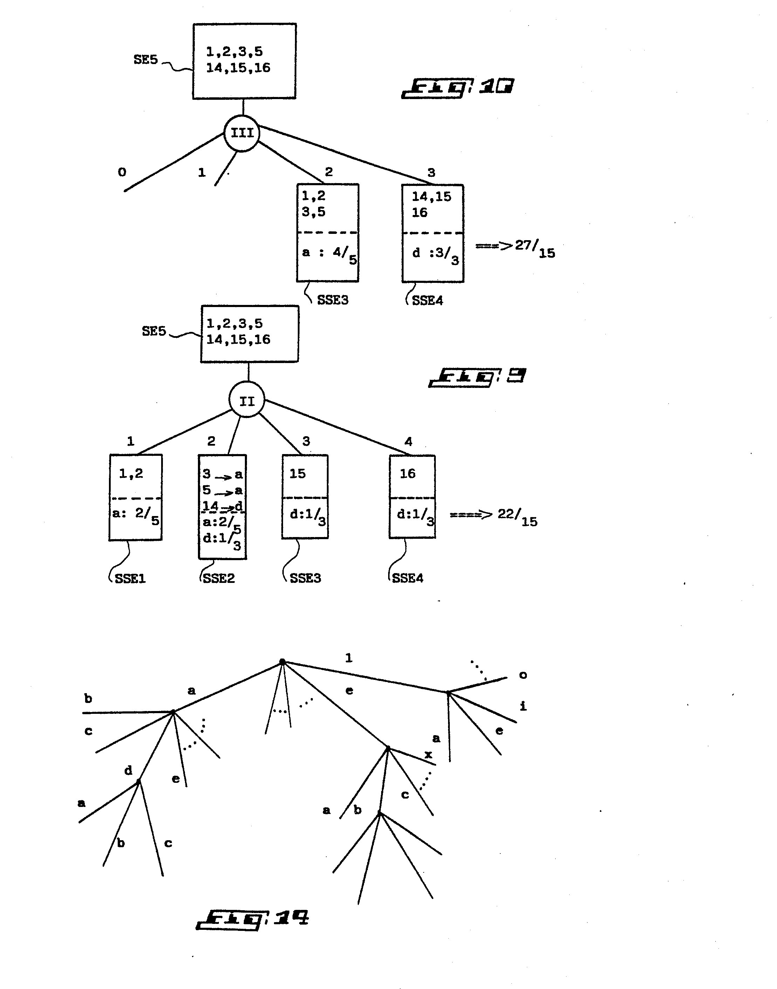

La figure 5 montre à titre d'exemple un tableau qui représente sous forme d'une structure globale l'ensemble des lettres, avec les différentes versions d'une lettre et associe à chaque élément d'écriture son élément de mesure. Ce tableau montre un exemple simplifié pour faciliter la compréhension de l'organisation de cette structure. Selon ce tableau, l'analyse du texte connu a permis au système de distinguer cinq versions différentes des lettres a et l, quatre versions des lettres c et e et trois versions de la lettre d. Chaque lettre et version de lettre est identifiée par un nombre constituant un code, que l'on voit dans la première colonne. Les colonnes I, II et III indiquent chacune les valeurs qui ont été établies par l'application d'un critère. Ainsi la colonne I indique les valeurs formant le résultat de l'application du critère HBGD tel que défini plus haut, en référence à la figure 1. La colonne II indique le résultat pour chaque lettre de l'application du critère de la taille. Ce critère permet de faire quatre distinctions représentées par les quatre codes 1 à 4, qui signifient respectivement "très petit", "petit", "grand" et "très grand". La colonne III est relative au critère de taille relative, c'est-à-dire au critère "décroissant-égal-croissant" avec les quatre codes de distinction 0 à 4 représentant respectivement "incalculable", "décroissant ", "égal", "croissant".

16

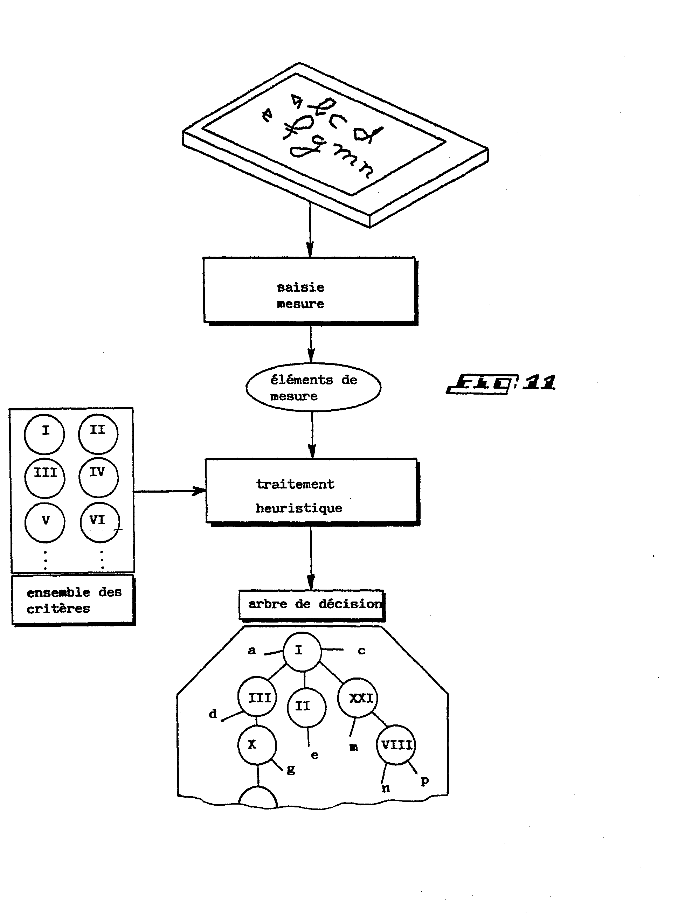

Le tableau ne montre que trois colonnes de critère ,
mais il est entendu qu'il y a autant de colonnes qu'il
y a de critères. Après l'établissement par le système
de la structure globale des lettres avec leur élément
de mesure, on soumet ceux-ci à un traitement heuristique.
Celui-ci sera expliqué en se référant aux figures 6 à
10 et permet la création d'un arbre de décision qui
sera utilisé lors de la reconnaissance d'un texte écrit
par la personne dont l'écriture a permis l'établissement
du tableau selon la figure 5, mais qui est inconnu au
système. Le traitement heuristique commence avantageusement par application du critère HBGD qui s'est révélé
comme étant le plus discriminatoire, à l'ensemble des
lettres. La colonne I contient cinq éléments codés de
distinction, et l'application de ce critère permet
d'établir cinq sous-ensembles SE1 à SE5, un sous-ensemble
pour chaque élément distinctif (figure 6). Sur le
tableau l'élément  BH n'est présent qu'une seule fois
et désigne le caractère 4 qui est un  a.  L'élément DHG
figure dans les éléments de mesure des caractères aux
numéros de code 10, 11, 12, 13, 17, 18, 19, 20, 21.
Ces caractères qui désignent les lettres  e  et  l  sont
donc contenus dans un sous-ensemble indiqué par SE2. De
la même manière s'obtiennent les sous-ensembles SE3
contenant les caractères 6, 8 qui sont tous des  c, le
sous-ensemble SE4 contenant le caractère au numéro de
code 7 qui est un  c  et le sous-ensemble SE5 qui
comporte les numéros de code  1, 2, 3, 5, 14, 15 et 16
qui désignent les caractères  a  et  d.

Les sous-ensembles SE1, SE3, SE4 ne contenant qu'un seul
caractère, le processus de reconnaissance des caractères
ou lettres correspondantes est terminé. Par contre les
sous-ensembles SE2 et SE5 contiennent des lettres différentes . Leur reconnaissance nécessite une analyse plus
poussée. Celle-ci consiste à appliquer à ces sous-
ensembles tous les critères qui n'ont pas été utilisés auparavant, donc tous les critères sauf le critère HBGD.

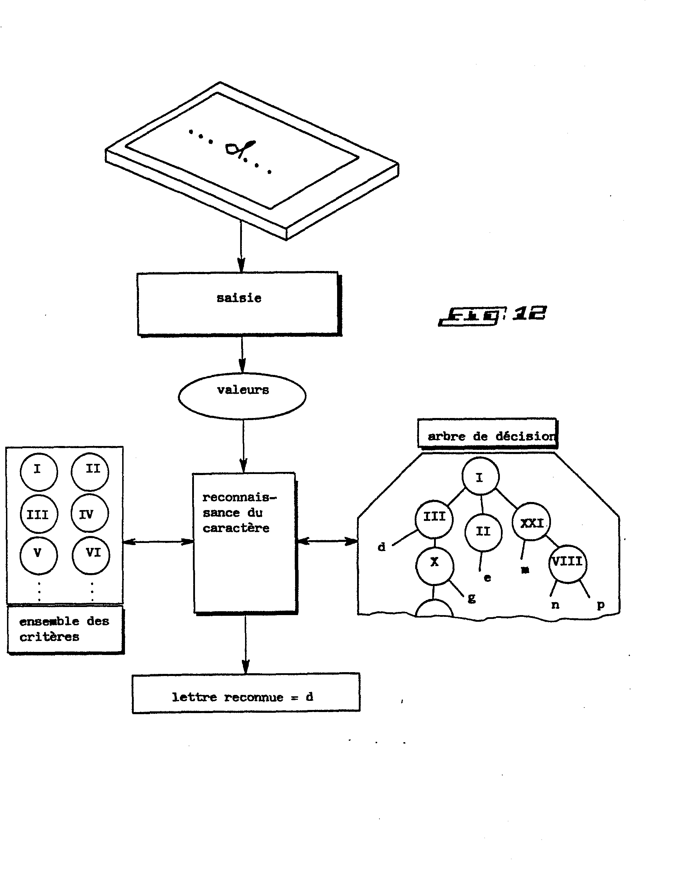

La figure 7 montre l'application du critère II au sous-ensemble SE2. Ce critère impliquant quatre possibilités de distinction, la structure illustrant le traitement des données du sous-ensemble SE2 comprend quatre branches, chacune se terminant par un sous-ensemble de SE2, indiqué par SSE1 à SSE4. Le sous-ensemble SSE1 que produit la possibilité de distinction qui porte le code 1 contient les tracés des caractères aux codes 10 et 11 qui sont des e. Le sous-ensemble SSE2 que produit l'élément distinctif ou la possibilité de distinction au code 2 comprend les caractères aux codes 12 et 13 qui s'avèrent être également des e. Les sous-ensembles SSE3 et 4 comprennent respectivement les caractères 17, 19 qui sont des l et 18, 20, 21 sui sont également des l. Un calcul de probabilité détermine l'efficacité du critère. A cette fin on retient dans chaque sous-ensemble seulement le caractère majoritaire. On calcule le nombre de ces caractères et divise cette valeur par le nombre total des caractères de ce type contenus dans le tableau. Ensuite on additionne les valeurs ainsi obtenues pour les sous-ensembles SSE1 à SSE4. Dans le cas de la figure 7, chaque sous-ensemble ne contient que des caractères qui désignent une seule lettre. C'est cette lettre qui est majoritaire. Ainsi le sous-ensemble SSE1 contient deux e ce qui permet d'obtenir le coefficient de probabilité 2/4 , 4 étant le nombre total des e dans le tableau. Les sous-ensembles SSE2 à SSE4 fournissent les coefficients de probabilité respectivement 2/4, 2/5 et 3/5. La somme de ces quatre coefficients s'élève à 2 qui constitue la valeur déterminant l'efficacité du critère II.

La figure 8 illustre l'application au sous-ensemble SE2 du critère IlI comprenant les quatre possibilités de distinction 0, 1, 2 et 3, ce qui conduit à une structure à quatre branches. Mais les possibilités 0, 1 et 3 n'étant associées au tableau à aucun des tracés ou caractères du sous-ensemble SE2, elles n'aboutissent pas à l'établissement d'un sous-ensemble de SE2. Par contre la possibilité 2 donne naissance à un sous-ensemble SSE3 qui contient l'ensemble des caractères de SE2, c'est-à-dire quatre e et cinq 1. Le coefficient de probabilité de la distribution des e et 1 est respectivement 4/4 et 5/5/ La somme des coefficients de probabilité est égale à 1. Ce facteur indicateur de l'efficacité du critère est inférieur à celui que l'on avait obtenu en utilisant le critère II. Ce dernier est par conséquent considéré comme le critère le plus discriminant et sera retenu pour l'établissement de l'arbre de décision, comme le montre la figure 6.

Les figures 9 et 10 illustrent le traitement du sous-ensemble SE5 impliquant l'application de l'ensemble des critères à l'exception du critère BHGD. Etant donné que l'exemple présent se limite aux critères II et III, on ne retiendra seulement que ces deux critères, comme cela était le cas lors du traitement du sous-ensemble SE2. La figure 9 donne le résultat de l'application au sous-ensemble SE5 du critère II. On obtient quatre sous-ensembles SSE1 à SSE4. Le sous-ensemble SSE1 contient les caractères 1, 2 qui sont tous des a. Le coefficient de probabilité est de 2/5. Le sous-ensemble SSE2 comporte des caractères 3, 5 qui sont des a et le caractère 14 désigne la lettre d. Le calcul de probabilité donne pour la lettre a le coefficient 2/5 et pour la lettre d le coefficient 1/3. La lettre a est donc majoritaire et on retiendra le coefficient 2/5 pour le calcul de l'efficacité du critère II. Les sous-ensembles SSE3 et SSE4 ne contiennent chacun qu'un caractère qui est un d, ce qui donne lieu à des coefficients de probabilité 1/3 et 1/3. La somme de tous les coefficients des lettres majoritaires donnent le facteur de discrimination 22/15.

La figure 10 montre le résultat de l'utilisation du critère III pour le discernement des caractères contenus dans le sous-ensemble SE5. Dans la mesure où le critère III comporte quatre possibilités de discrimination, on devrait obtenir quatre sous-ensembles. Mais puisqu'aucun caractère du sous-ensemble SE5 ne présente dans son élément de mesure, c'est-à-dire dans l'ensemble de ces caractéristiques, le code représentatif des possibilités 0 et 1, seulement les possibilités 2 et 3 fournissent chacune un sous-ensemble. Le sous-ensemble SE3 comporte les quatre caractères 1, 2, 3 et 5, qui sont tous des a. On obtient le coefficient de probabilité 4/5. Le sous-ensemble SSE4 comporte le caractère 14 et 15, 16 qui se révèle être des d. Le coefficient de probabilité est 3/3 puisque 3 est le nombre total des d. La somme des deux coefficients de probabilité donne la valeur 9/5 égale à 27/15.

La comparaison des facteurs indicateurs de l'efficacité de discrimination des critères II et III appliqués aux sous-ensembles de SE5, montre que le critère III avec son facteur 27/15 est plus efficace que le critère II ayant un facteur 22/15. On ne retiendra donc que le critère III dans l'arbre de décision de la figure 6.

La description détaillée qui vient d'être faite montre le principe du traitement heuristique qui aboutit à la construction de l'arbre de décision qui ne retient que les caractères les plus discriminants et détermine les critères qui seront utilisés à chaque noeud de l'arbre de décision. En utilisant comme premier critère le code HBGD on obtient près de 200 branches sur une écriture habituelle. Certaines branches se terminent par des sous-ensembles qui forment des feuilles de l'arbre, où quelques caractères se trouvent déjà triés et isolés des autres. La procédure d'apprentissage se terminant par la construction de l'arbre de décision et l'établissement du fichier caractéristique d'une écriture donnée est représentée sous forme d'un organigramme à la figure 11. On constate que dans une première opération la personne dont l'écriture doit être reconnue par le système écrit le texte connu sur un support, par exemple une tablette à digitaliser. La figure montre cette tablette avec un certain nombre de lettres. Cette tablette qui est connue en soi génère à partir des tracés des séries de signaux électriques chacun représentatif d'un point du tracé et le transmet au dispositif de traitement de l'écriture tel qu'un micro-ordinateur. Celui-ci est programmé pour effectuer la saisie, le découpage du texte en éléments désignés par leur nom de lettre comme cela vient d'être décrit, et établit pour les différents caractères des éléments de mesure, ce qui aboutit à une structure organisée de la façon représentée au tableau selon la figure 5. Le micro-ordinateur effectue ensuite le traitement heuristique de génèse de l'arbre de décision par application des critères.

La figure 12 montre sous forme d'un organigramme la procédure de la reconnaissance d'un texte inconnu au système mais écrit par une personne pour lequel le système avait auparavant établi un fichier catactéristique contenant un arbre de décision. Dans l'exemple donné la personne a écrit sur la tablette à digitaliser la lettre d. Le micro-ordinateur est programmé de façon à effectuer, comme auparavant, la saisie de ce caractère. L'ordinateur est programmé pour effectuer ensuite l'opération proprement dite de la reconnaissance du caractère d en se reportant à l'arbre de décision qui a été effectué pour la personne dont l'écriture doit être reconnue. Supposons que le critère HBGD appliqué au tracé de la lettre d à reconnaître donne l'élément ayant le code GDH. L'arbre de décision de la figure 6 indique que la lettre à reconnaître doit se trouver dans le sous-ensemble SE5. Selon l'arbre de décision il faut maintenant appliquer le critère III. Si le critère III appliqué à ce même tracé donne pour résultat le code 3, l'ordinateur sait que le caractère à reconnaître doit se trouver dans le sous-ensemble SSE4. Ce sous-ensemble contient les caractères aux codes 14, 15 et 16 qui désignent selon le tableau de la figure 5 effectivement la lettre  d.  Ainsi selon l'invention l'ordinateur a pu reconnaître la lettre  d  par application de seulement deux critères parmi les très nombreux critères que l'on retient pour établir l'élément de mesure pour chaque lettre. On comprend maintenant que l'invention permet la reconnaissance en temps réel tout en utilisant des micro-ordinateurs standards par exemple du type qu'on utilise habituellement dans des systèmes  à traitement de texte.

Si l'écriture ayant amené à la construction de l'arbre de décision subit des modifications, le système selon l'invention permet, simultanément à la reconnaissance une remise à jour des éléments de mesure du ou des caractères modifiés et, le cas échéant, de l'arbre de décision.

Une caractéristique supplémentaire mais fort utile de l'invention est la possibilité de comparer des groupes d'éléments d'écriture formant des mots à un dictionnaire de forme  lexicale  afin de pouvoir reconnaître un mot sans nécessairement identifier chacune des lettres ou afin de pouvoir lever des ambiguïtés provenant du fait qu'un tracé peut raisonnablement être découpé de plusieurs façons. Un tel problème sera résolu selon l'invention à l'aide d'une structure que l'on appelle treillis de distribution et d'un dictionnaire hiérarchisé d'une structure spécifique. La figure 13 montre le mot "admise" avec les coupures que pourrait effectuer le micro-ordinateur et en dessous du mot le treillis établi par celui-ci. Ce treillis indique les différentes possibilités de reconnaissance des segments de tracé du mot "admise". Cependant dans cet exemple seules les lettres les plus probables de chaque distribution sont représentées. Les deux hypothèses des "d" et "h" s'excluent mutuellement car elles ont un segment en commun.

Les ambiguïtés seront levées en se reportant au dictionnaire spécifique de l'invention dont le principe de structure est illustré à la figure 14. Il s'agit d'une structure arborescente dans laquelle par exemple pour chaque lettre de l'alphabet est prévue une branche. Toutes ces branches prennent naissance à un point commun. Chaque branche comporte un noeud ou prennent naissance d'autres branches dont chacune est associée à une lettre qui est susceptible de former avec la branche initiale une combinaison de lettres pouvant avoir une signification. Chacune de ces sous-branches constitue le point de départ de nouvelles branches associées chacune à une lettre de façon à former de nouvelles combinaisons de lettres pouvant avoir une signification. Cette structure permet également de tenir compte des différentes formes grammaticales des mots. Une structure arborescente contenant par exemple 80.000 mots et en tenant compte des différentes formes grammaticales d'un mot, 200.000 combinaisons raisonnables de lettres est tout à fait satisfaisante pour une reconnaissance en temps réel d'une écriture. Une telle structure nécessite cependant un espace mémoire de par exemple 180 kilo-octets seulement.

Grâce à l'établissement de l'arbre de décision lors d'une procédure d'apprentissage et, le cas échéant, de la présence d'un dictionnaire avantageusement organisé sous forme d'une structure arborescente, le procédé selon l'invention permet la reconnaissance d'une écriture en temps réel, à l'aide d'un matériel standard ne nécessitant qu'un support d'écriture tel qu'une tablette graphique et un micro-ordinateur. Un micro-ordinateur disposant d'une mémoire centrale de par exemple 512 kilo-octets, augmenté d'un espace mémoire approprié pour le lexique, est tout à fait satisfaisant.

Le procédé selon l'invention a de nombreuses applications. Ainsi il peut constituer un dispositif de saisie pour micro-ordinateurs, remplaçant aussi bien le clavier (écriture directe sur la tablette des textes, des commandes, etc) qu'un organe de commande de type roulant, couramment appelé "souris". Il permet aussi la dactylographie directe de textes manuscrits par des personnes dont l'écriture a été préalablement explorée ou apprise lors d'une procédure d'apprentissage en vue de la constitution d'un arbre de décision.

0261997

24

Revendications

1. Procédé de reconnaissance d'écriture manuscrite, du type qui comprend
- l'application de critères prédéterminés, à un tracé d'écriture manuscrite ou à des éléments de ce tracé, afin que plusieurs caractéristiques de ce tracé ou de ces éléments soient déterminées,
- la comparaison des caractéristiques ainsi déterminées aux caractéristiques représentatives d'éléments connus d'écriture, et
- l'identification d'un élément du tracé à un élément connu d'écriture lorsque la comparaison de leurs caractéristiques donne un résultat prédéterminé, caractérisé en ce qu'il comprend l'établissement d'une séquence d'opérations prédéterminées en fonction des caractéristiques déterminées par application des critères aux éléments de tracé.

2. Procédé selon la revendication 1, caractérisé en ce que la phase d'établissement de la séquence d'opérations comprend une détermination de l'ordre dans lequel les critères doivent être appliqués au tracé ou à des éléments de ce tracé.

3. Procédé selon l'une des revendications 1 et 2, caractérisé en ce que la phase d'établissement comprend la sélection de certains critères seulement parmi un grand nombre de critères.

4. Procédé selon l'une quelconque des revendications précédentes, caractérisé en ce qu'il comporte en outre une remise progressive à jour des caractéristiques représentatives des éléments connus d'écriture, de l'ordre de la séquence d'opérations ou des critères sélectionnés.

25

5. Procédé selon l'une quelconque des revendications précédentes, caractérisé en ce qu'il comprend une phase préalable d'apprentissage dans lequelle des éléments connus d'écriture manuscrite, tels des lettres et des chiffres, sont soumis à l'application de plusieurs critères prédéterminés, afin que des caractéristiques représentatives de ces éléments connus d'écriture soient déterminées et conservées, cette phase d'apprentissage comprenant l'établissement de la séquence d'opérations utilisée pour la reconnaissance.

6. Procédé selon l'une quelconque des revendications précédentes, caractérisé en ce qu'il comprend le codage de points remarquables du tracé et des éléments de tracé.

7. Procédé selon la revendication 6, caractérisé en ce qu'il comprend l'élimination de certains points remarquables en fonction de critères de proximité.

8. Procédé selon l'une quelconque des revendications précédentes, caractérisé en ce qu'il comprend aussi le découpage du tracé en éléments de tracé.

9. Procédé selon la revendication 8, caractérisé en ce que le découpage du tracé comprend la détermination de points particuliers de coupure possible et de l'évaluation, pour chaque point particulier, de la probabilité que ce point constitue effectivement une coupure entre deux éléments d'écriture.

10. Procédé selon l'une quelconque des revendications précédentes, caractérisé en ce qu'il comporte en outre la comparaison de groupes d'éléments d'écriture provisoirement identifiés à un dictionnaire contenant de tels groupes.

| 1 | 2 | 3 | 4 | 5 | 6 | 7 | 8 | 9 | 10 | 11 | 12 | 13 | | 14 | 15 | 16 | 17 | 18 | 19 | 20 | 21 | 22 | 23 |
|---|---|---|---|---|---|---|---|---|----|----|----|----|---|----|----|----|----|----|----|----|----|----|----|
| H | B | H | B | H | B | H | B | D | H | L | B | L | | L | B | D | H | L | G | B | D | H | L |

FIG.1

FIG.2

FIG.3

FIG.4

0261997

| No. Code | caractère | critères | | | |
|:---:|:---:|:---:|:---:|:---:|:---:|
| | | I | II | III | .../... |
| | | (HBGD) | (taille) | (croissant-égal)<br>décroissant) | |
| 1 | a | GBH | 1 | 2 | |
| 2 | a | GBH | 1 | 2 | |
| 3 | a | GBH | 2 | 2 | |
| 4 | a | GBH | 2 | 2 | |
| 5 | a | GBH | 2 | 2 | |
| 6 | c | G | 1 | O | |
| 7 | c | GB | 1 | O | |
| 8 | c | G | 2 | O | |
| 9 | c | G | 2 | O | |
| 10 | e | DHG | 1 | 2 | |
| 11 | e | DHG | 1 | 2 | |
| 12 | e | DHG | 2 | 2 | |
| 13 | e | DHG | 2 | 2 | |
| 14 | d | GBH | 2 | 3 | |
| 15 | d | GBH | 3 | 3 | |
| 16 | d | GBH | 4 | 3 | |
| 17 | l | DHG | 3 | 2 | |
| 18 | l | DHG | 4 | 2 | |
| 19 | l | DHG | 3 | 2 | |
| 20 | l | DHG | 4 | 2 | |
| 21 | l | DHG | 4 | 2 | |

Fig. 5

(admise)

| c | l | c | l | r | r | r | l | s | e |
|---|---|---|---|---|---|---|---|---|---|
| a | | | d | b | n | n | u | | x |
| | | | | | n | | | | |

Fig. 13

**Fig. 6**

SE2

```
10,11,12
13,17,18
19,20,21
```

_Fig 7_

Ⅱ

1    2    3    4

SSE1
```
10 —> e
11 —> e
- - - - -
e : 2/4
```

SSE2
```
12 —> e
13 —> e
- - - - -
e : 2/4
```

SSE3
```
17 —> 1
18 —> 1
─────
1 : 2/5
```

SSE4
```
18 —> 1
20 —> 1
21 —> 1
─────
1 : 3/5
```

===> 2

SE2

```
10,11,12
13,17,18
19,20,21
```

_Fig 8_

Ⅲ

0    1    2    3

SSE3
```
10 ⎫
11 ⎪
12 ⎬ —> e
13 ⎭

17 ⎫
18 ⎪
19 ⎬ —> 1
20 ⎪
21 ⎭
- - - - -
e : 4/4

1 : 5/5
```

Fig. 10

SE5 | 1,2,3,5 14,15,16

III

0   1   2   3

1,2 3,5 / a : 4/5  (SSE3)

14,15 16 / d :3/3  (SSE4)  ===> 27/15

Fig. 9

SE5 | 1,2,3,5 14,15,16

II

1   2   3   4

1,2 / a: 2/5  (SSE1)

3 → a, 5 → a, 14 → d, a:2/5, d:1/3  (SSE2)

15 / d:1/3  (SSE3)

16 / d:1/3  (SSE4)  ====> 22/15

Fig. 14

FIG. 11

Fig. 12

Office européen
des brevets

# RAPPORT DE RECHERCHE EUROPEENNE

Numero de la demande

EP 87 40 0911

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PROCEEDINGS OF THE 5th INTERNATIONAL CONFERENCE ON PATTERN RECOGNITION, 1-4 décembre 1980, vol. 1 des 2, pages 723-725, IEEE Computer Society, Institute of Electrical and Electronics Engineers, Floride, US; M. BERTHOD et al.: "On line cursive script recognition: A structural approach with learning"<br>* Page 724, chapitre V; page 723, chapitre I *<br>--- | 1,5-8, 10 | G 06 K 9/68 |
| A | IEEE PROCEEDINGS OF THE 2nd INTERNATIONAL JOINT CONFERENCE ON PATTERN RECOGNITION, 13-15 août 1974, Copenhague, pages 305, 306, IEEE, Washington, US; G. GAILLAT: " An on-line character recognizer with learning capabilities<br>* Chapitre II.2 *<br>--- | 1,3,5 | |
| A | INFORMATION PROCESSING 71 - PROCEEDINGS OF THE INTERNATIONAL FEDERATION FOR INFORMATION PROCESSING, Ljubljana, Yougoslavie, 23-28 août 1971, pages 218-223, North-Holland and Publishing Company, Amsterdam, NL; G.M. MILLER: "Real-time classification of handwritten script words"<br>* Pages 218-220, chapitre 2 *<br>---      -/- | 1,8,10 | DOMAINES TECHNIQUES RECHERCHES (Int. Cl.4)<br><br>G 06 K 9/00 |

Le présent rapport a été établi pour toutes les revendications

| Lieu de la recherche | Date d'achèvement de la recherche | Examinateur |
|---|---|---|
| LA HAYE | 14-12-1987 | SONIUS M.E. |

EPO FORM 1503 03.82 (P0402)

**Office européen des brevets**

## RAPPORT DE RECHERCHE EUROPEENNE

Numero de la demande

EP 87 40 0911

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PROCEEDINGS IECON'85 - 1985 INTERNATIONAL CONFERENCE ON INDUSTRIAL ELECTRONICS, CONTROL AND INSTRUMENTATION, San Francisco, Californie, 18-22 novembre 1985, vol. 2, Industrial Applications of Mini, Micro & Personal Computers, The Industrial Electronics Society of the Institute of Electrical and Electronics Engineers Inc. (IES of IEEE) - in association with The Society of Instruments and Control Engineers of Japan (SICE of Japan), pages 675-678; M. ORITA et al.: "Learning pattern recognition system" * Page 675, chapitre 2 * ----- | 1-3 | |
| | | | **DOMAINES TECHNIQUES RECHERCHES (Int. Cl.4)** |

Le présent rapport a été établi pour toutes les revendications

| Lieu de la recherche | Date d'achèvement de la recherche | Examinateur |
|---|---|---|
| LA HAYE | 14-12-1987 | SONIUS M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)